Europäisches Patentamt

European Patent Office

Office européen des brevets

(19)

(11) Numéro de publication : **0 074 881**
**B1**

(12)
# FASCICULE DE BREVET EUROPÉEN

(45) Date de publication du fascicule du brevet :
**03.04.85**

(21) Numéro de dépôt : **82401617.4**

(22) Date de dépôt : **02.09.82**

(51) Int. Cl.⁴ : **G 01 N 3/24, B 22 C 5/00**

(54) Procédé et dispositif de mesure automatique en continu de la résistance au cisaillement du sable à vert utilisé dans les installations de moulage modernes.

(30) Priorité : **11.09.81 FR 8117244**

(43) Date de publication de la demande :
**23.03.83 Bulletin 83/12**

(45) Mention de la délivrance du brevet :
**03.04.85 Bulletin 85/14**

(84) Etats contractants désignés :
**CH DE LI SE**

(56) Documents cités :
**DE-B- 2 937 473**
**FR-E-    92 286**
**US-A- 3 335 787**
**US-A- 3 373 977**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Kunsch, Robert**
**5, rue Georges Bizet**
**F-92500 Rueil Malmaison (FR)**

Jouve, 18, rue St-Denis, 75001 Paris, France

## Description

L'invention concerne le moulage en sable, et plus particulièrement les procédés de moulage modernes automatiques et répétitifs à cadence élevée. Elle a pour objet un procédé et un dispositif de mesure automatique tels que définis et caractérisés par les revendications 1 et 4, respectivement.

On rappelle qu'un procédé bien connu consiste à confectionner des mottes sensiblement parallélépipédiques en comprimant du sable dans une presse horizontale entre une plaque modèle avant ouvrante et une plaque modèle arrière exerçant la poussée, ces mottes étant assemblées au fur et à mesure de leur sortie de la presse en une colonne horizontale continue reconstituant une empreinte de moulage complète à chaque jonction entre mottes, ce qui permet à la suite une coulée de métal à cadence répétée dans ces diverses empreintes, les mottes continuant à avancer pendant le refroidissement des pièces jusqu'à un poste d'extrémité où a lieu le désablage. A chaque cycle d'opération le sable est projeté verticalement à grande vitesse entre la plaque avant fermée et la plaque arrière reculée avant d'effectuer la mise en pression.

Le sable utilisé est du sable de moulage dit « à vert », matériau composé de grains de silice mélangés avec une argile appelée bentonite, de la poudre de charbon et de l'eau. Moyennant un malaxage convenable, chaque grain solide est enrobé d'un mince film d'argile convenablement hydraté afin de donner les forces de cohésion nécessaires sous l'effet du serrage à haute pression, généralement de l'ordre de 10 kg/cm².

Comme tout sable de moulage, ce sable doit satisfaire à des exigences contradictoires, puisqu'il doit être suffisamment fluide pour pouvoir être compacté avec aisance autour de tous les détails des plaques modèles et en même temps être suffisamment rigide après compactage pour ne pas s'effondrer ni se déformer après séparation des plaques modèles. D'autre part, il doit avoir une bonne cohésion, notamment une résistance au cisaillement suffisante pour résister aux contraintes de moulage, telles que la pression hydrostatique du métal en fusion, les chocs thermiques au moment de la coulée et les contraintes dues à la contraction du métal en cours de solidification, mais en même temps pouvoir se briser sans trop de difficulté lors du désablage pour l'extraction des pièces.

Les procédés modernes de moulage tels que celui rappelé plus haut sont encore plus exigeants sur la qualité du sable en raison de l'absence de châssis qui nécessite donc une plus grande cohésion des mottes par elles-mêmes, de la haute pression subie par le sable dans les plans de joint des mottes de tête qui doivent repousser tout l'ensemble de la colonne, et enfin du fait que le désablage lui-même doit avoir lieu d'une manière automatique et à cadence élevée. Dans chaque cas on est donc conduit à définir une qualité optimale de sable et il est indispensable de contrôler la qualité de ce sable pour qu'elle demeure entre les limites étroites et bien précises ainsi définies.

Les méthodes usuelles de contrôle de la qualité du sable consistent généralement à prélever un échantillon de sable non compacté, c'est-à-dire pris dans la trémie de la machine, à confectionner dans un appareillage extérieur de laboratoire une éprouvette cylindrique (5 cm × 5 cm) serrée à 10 kg/cm² et à cisailler cette éprouvette sur une machine spéciale. En fonction du résultat de cette mesure on module les régénérations en agents agglomérants, ou argile bentonite, en fonction des fluctuations observées par rapport aux limites fixées. Une telle méthode peut être illustrée par le document FR-E-92286. Ces mesures sont répétitives, mais en raison du procédé utilisé la cadence est toujours faible et dépasse rarement plus de deux mesures par heure, ce qui occupe un opérateur en permanence et introduit un retard important entre l'instant du prélèvement et l'instant où le résultat de la mesure est connu.

Ce procédé ne permet de satisfaire que d'une manière trop approximative aux exigences exposées plus haut sur la constance de la qualité du sable. En outre, le contrôle porte seulement sur la qualité du sable proprement dit avant compactage, et non sur les conditions réelles dans lesquelles il se trouve à l'intérieur de la motte.

Le but de l'invention est d'éliminer les inconvénients précédents en fournissant un procédé et un dispositif pour mesurer, d'une manière aussi automatique et aussi rapide que possible, non seulement la qualité du sable proprement dite, mais également la qualité de son compactage à l'intérieur de chaque motte.

Le procédé selon l'invention consiste notamment à fixer sur une des plaques modèles, de préférence sur la plaque modèle arrière, un anneau de mesure comportant un trou central, de préférence un alésage dont l'axe est parallèle à la plaque modèle et de préférence parallèle à la direction de soufflage du sable, c'est-à-dire généralement vertical, avec sur ses deux bords latéraux un amincissement comportant une jauge de contrainte raccordée électriquement à travers le support et la plaque modèle à un appareillage de mesure extérieur, cet anneau étant compris entre deux plans parallèles ou de préférence en légère dépouille dans le sens du démoulage, de telle manière que lors de l'extraction de la plaque modèle par rapport à la motte, cet anneau produise un double cisaillement du cylindre de sable contenu dans son alésage et qui a été compacté par le processus normal de confection de la motte dans les conditions normales régnant au cœur de celle-ci. Les signaux fournis par les jauges de contrainte sont exploités électroniquement pour en déduire la résistance au cisaillement, et traités informatiquement pour gérer les divers paramètres, en particulier les ordres de modulation des régénérations en agents agglomérants, et les ordres de réglage de la pression fournie par la presse. Il est déjà connu du document US-A-3 335 787 un appareil pour le contrôle de la qualité du sable, faisant usage de capteurs fixés sur une plaque modèle. Toutefois, cet appareil n'envisage pas la mesure de la résistance au cisaillement et n'utilise pas d'anneau de mesure.

D'autres particularités de l'invention apparaîtront dans la description qui va suivre d'un mode de réalisation pris comme exemple et représenté sur le dessin annexé sur lequel :

la figure 1 est une vue partielle en perspective de la presse et de sa plaque modèle arrière en position sortie ;

les figures 2 et 3 sont respectivement des vues en élévation et de côté de l'anneau de mesure.

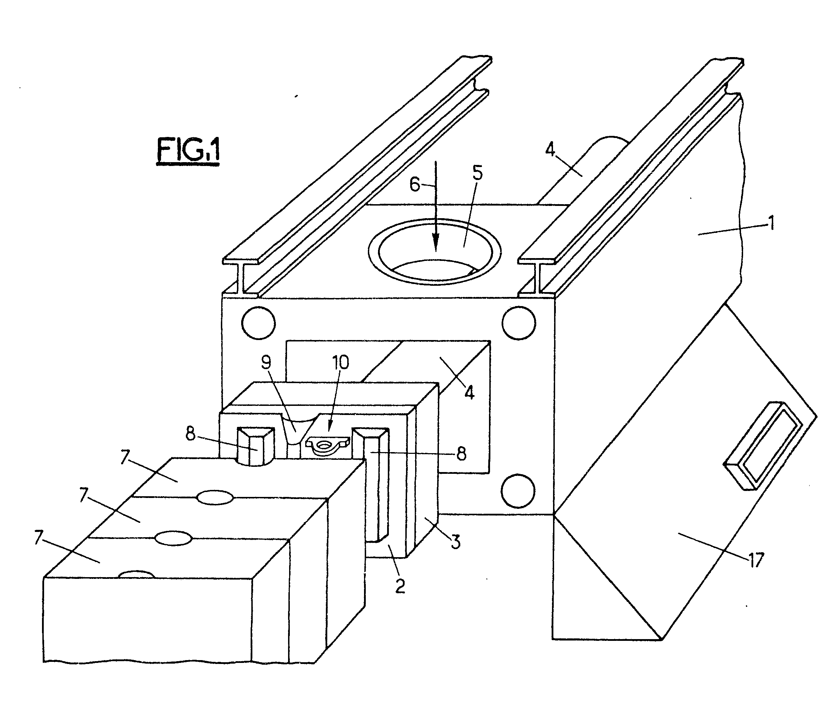

On voit en particulier sur la figure 1 la presse 1, la plaque modèle arrière 2 portée par le plateau 3 de la presse, solidaire de la tige 4, et l'orifice 5 par où est soufflé le sable dans la direction représentée par la flèche 6. On voit également le début de la colonne de mottes 7.

La plaque modèle 2 comporte de la manière usuelle des saillies 8 correspondant à la forme des pièces à mouler limitée au plan de joint (les formes au-delà de ce plan étant portées par l'autre plaque modèle non représenté) et également une saillie 9 destinée à réserver le trou de coulée et le canal de coulée (directe ou en source).

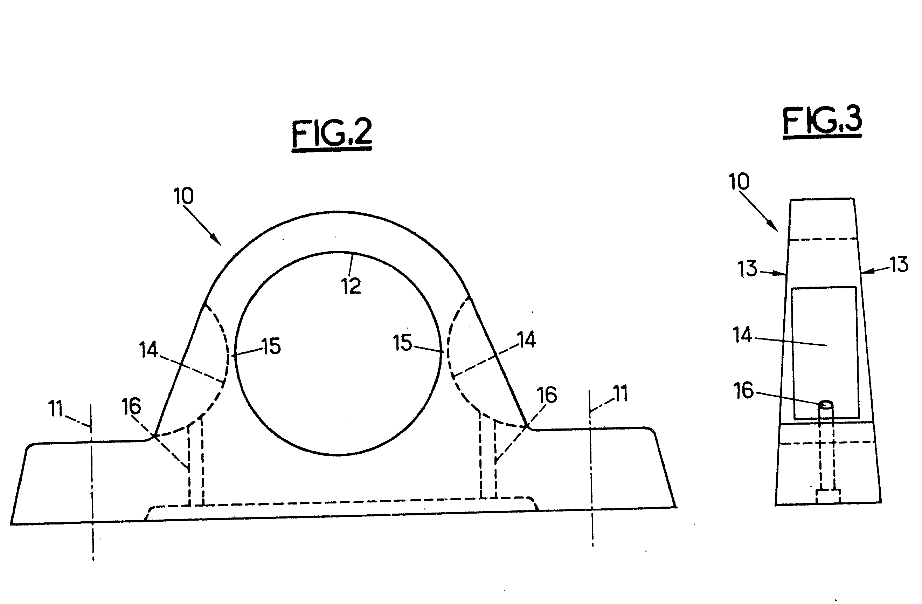

Conformément à un aspect de l'invention, on vient fixer sur cette plaque modèle 2, en un endroit approprié entre ces diverses saillies 8 et 9, et de préférence au cœur de la motte, un anneau de mesure 10 représenté en détail sur les figures 2 et 3.

Cet anneau a avantageusement la forme d'un palier pour permettre sa fixation commode sur la plaque modèle 2 à l'aide de vis traversant les trous 11 de sa semelle. Il comporte essentiellement un alésage 12, par exemple de 50 mm, dont l'axe est parallèle à la direction 6, c'est-à-dire généralement vertical. Le corps de cet anneau, en acier résistant à l'usure, de préférence en acier 35CD4T4, est limité entre deux plans 13 de direction sensiblement perpendiculaire à la plaque modèle 2, mais de préférence en légère dépouille dans le sens du démoulage comme représenté sur la figure 3. Deux fraisages latéraux 14, par exemple cylindriques comme représenté sur les figures, ont pour effet de réduire la section des branches latérales de l'anneau, qui travaillent dans la direction d'extraction de la plaque modèle, à une faible section 13, par exemple de l'ordre de 1,5 mm d'épaisseur. A l'endroit de cet amincissement maximal, qui correspond à l'endroit où les tangentes à l'alésage 12 sont parallèles à la direction de la tige 4 de la presse, on vient coller dans le fond des fraisages 14 des jauges de contrainte non représentées, qui sont couplées en pont de Wheatstone de la manière usuelle avec des jauges de compensation thermiques, et raccordées électriquement par des câbles traversant l'anneau 10 à travers des trous 16, et la plaque modèle 2 ainsi que le plateau 3 à travers des trous appropriés pour joindre le dispositif de mesure et d'exploitation 17 par des connexions flexibles non représentées.

Lors du compactage du sable entre les deux plaques modèles, le sable remplit également l'intérieur de l'alésage 12 de l'anneau 10 et s'y trouve compacté à la pression qui règne à cet endroit. Lors de la course d'extraction de la plaque modèle, par extraction de la tige 4, l'anneau entraîne le cylindre de sable qu'il contient et le sépare du reste de la motte par un double cisaillement selon les deux plans 13. La mise en dépouille de ces deux plans facilite cette séparation en évitant d'introduire des contraintes parasites qui pourraient fausser la mesure. De la même façon les deux fraisages 14 sont de préférence comblés par une matière destinée à protéger les jauges de contrainte et en même temps éviter toute contre-dépouille.

La résistance au cisaillement du cylindre de sable selon les deux plans de cisaillement 13 est donc mesurée exactement par la somme des tensions des deux parties 15, mesurées par les jauges de contrainte, rapporté à la somme des deux sections du cylindre de sable.

L'empreinte en négatif fournie par l'anneau dans la motte est sans importance dans la suite étant donné qu'elle ne communique pas avec les autres empreintes ni avec le trou de coulée. D'autre part, grâce à l'orientation choisie, le cylindre de sable restant dans l'alésage 12 de l'anneau se trouve chassé au moulage suivant par la projection de sable soufflé selon la direction 6, le sable ainsi chassé vers le bas par la pression se trouvant remis en cohésion avec le reste du sable lors du cycle de pressage suivant.

L'invention permet ainsi, à chaque cycle de confection d'une motte 7, de disposer d'une mesure précise et instantanée de la résistance au cisaillement du cylindre de sable sous la pression de compactage effectivement présente dans la motte.

Ces diverses mesures, qui se succèdent au rythme de la presse, peuvent avantageusement être exploitées par un calculateur électronique qui calcule la résistance au cisaillement en unités convenables et diverses données nécessaires, et effectue le stockage en mémoire de ces diverses données pour ensuite effectuer périodiquement, par exemple tous les cent contrôles, un calcul des grandeurs statistiques, telles que moyenne et dispersion, qu'il compare avec l'intervalle de tolérance préétabli, puis fournir les indications nécessaires à la correction manuelle ou automatique de la modulation des régénérations en agents agglomérants des charges de sable successives qui sont acheminées vers la trémie de la presse. En effet tant que la presse travaille à pression constante, les variations dans les mesures ne peuvent être imputées qu'aux variations de composition du sable.

Cependant le procédé selon l'invention permet en outre, en connaissant les propriétés du sable utilisé, de contrôler également la qualité du compactage au cœur du moule et son évolution, et de régler en conséquence la pression fournie par la presse. Il permet également de contrôler unitairement que chaque moule reçoit effectivement la pression correcte et signaler instantanément toute défaillance.

L'invention permet ainsi d'éviter l'emploi d'un contrôleur et de fournir de surcroît l'indication instantanée sur les divers réglages à effectuer, manuellement ou automatiquement, en vue d'une parfaite constance de fabrication permettant d'obtenir des pièces de fonderie de qualité et avec un faible pourcentage de rebut.

Enfin il est clair que l'invention s'adapte très simplement à l'appareillage existant.

**Revendications**

1. Procédé de mesure automatique de la résistance au cisaillement du sable à vert utilisé dans un processus de moulage répétitif en sable à partir de plaques modèles, et d'exploitation du résultat de la mesure en vue de moduler les divers paramètres du processus, caractérisé par le fait que l'on place sur une des plaques modèles (2) un anneau de mesure (10) comportant un orifice (12) permettant de cisailler une rondelle de sable lors de la course d'extraction de ladite plaque modèle (2), et des jauges de contrainte fixées dans des parties latérales amincies (15) de cet anneau de mesure (10) de part et d'autre dudit orifice (12), que l'on raccorde électriquement lesdites jauges à travers la plaque modèle (2) à un dispositif électronique (17) de mesure et d'exploitation, que l'on calcule dans ce dispositif de mesure diverses grandeurs physiques caractéristiques du sable dont la résistance au cisaillement de la rondelle de sable comprimée dans ledit orifice (12) lors du compactage, puis que l'on traite le résultat desdites mesures par un calculateur pour déterminer les grandeurs de modulation, notamment de la régénération en agents agglomérants du sable recyclé.

2. Procédé selon la revendication 1, caractérisé par le fait que l'on place l'anneau de mesure (10) sur la plaque modèle arrière (2) d'une presse horizontale (1) avec ledit orifice (12) orienté dans le sens (6) du soufflage de sable dans ladite presse (1) de manière à vider, au cours de chaque opération de remplissage, la rondelle de sable cisaillée par l'anneau de mesure (10) au cours du cycle précédent.

3. Procédé selon une des revendications précédentes, caractérisé par le fait que l'on utilise les caractéristiques du sable, déterminées antérieurement, pour déterminer la pression de compactage au cœur de la motte et calculer la modulation de la pression de serrage de la presse (1) en conséquence.

4. Dispositif pour la mise en œuvre du procédé selon une des revendications 1 à 3, pour la mesure automatique de la résistance de cisaillement du sable à vert utilisé dans un processus de moulage répétitif en sable à partir de plaques modèles et pour l'exploitation du résultat de la mesure en vue de moduler les divers paramètres du processus, ledit dispositif comportant un capteur fixé sur l'une des plaques modèles et permettant d'effectuer ladite mesure, caractérisé en ce que ledit capteur est un anneau de mesure (10) comportant un orifice (12) permettant de cisailler une rondelle de sable lors de la course d'extraction de ladite plaque modèle (2) et des jauges de contrainte fixées dans des parties latérales amincies (15) de cet anneau de mesure (10) de part et d'autre dudit orifice (12) ; ledit anneau (10) ayant en outre la forme d'un palier, ledit orifice (12) étant un alésage cylindrique et lesdites parties latérales, amincies (15) étant obtenues par des fraisages extérieurs (14) au fond desquels sont disposées les jauges de contrainte.

5. Dispositif selon la revendication 4, caractérisé par le fait que le corps de l'anneau de mesure (10) est délimité dans la direction de l'axe dudit alésage cylindrique (12) par deux plans (13) en légère dépouille par rapport au sens de démoulage.

6. Dispositif selon une des revendications 4 et 5, caractérisé par le fait que lesdits fraisages (14) communiquent par des trous (16) avec le plan de la base dudit palier pour permettre de loger les fils de connexion des jauges de contrainte, et que lesdits fraisages (14) sont ensuite comblés par un remplissage assurant la protection des jauges de contrainte et la suppression de toute contre-dépouille.

**Claims**

1. A process for automatically measuring the shearing strength of the green sand used in a repetitive sand moulding process using pattern plates, and for using the result of the measurement operation for modulating the various parameters of the moulding process, characterised by placing on one of the pattern plates (2) a measuring ring (10) comprising an orifice (12) which makes it possible to shear a disc of sand during the movement for extraction of said pattern plate (2) and strain gauges fixed in the reduced-thickness lateral portions (15) of said measuring ring (10) on respective sides of said orifice (12), electrically connecting said gauges by way of the pattern plate (2) to an electronic measuring and operating device (17), calculating in said device various physical parameters which are characteristic of the sand, including the shearing strength of the disc of sand which is compressed in said orifice (12) in the compacting operation, then processing the result of said measurements by a computer for determining the modulation parameters, in particular for regeneration in respect of agglomerating agents in the recycled sand.

2. A process according to claim 1 characterised by placing the measuring ring (10) on the rearward pattern plate (2) of a horizontal press (1) with said orifice (12) oriented in the direction (6) of sand blowing into said press so that in the course of each filling operation the disc of sand which is sheared by the measuring ring (10) in the course of the preceding cycle is blown out.

3. A process according to one of the preceding claims characterised by using the previously determined characteristics of the sand to determine the compacting pressure at the heart of the sand mould portion and calculate modulation of the clamping pressure of the press (1) in consequence.

4. Apparatus for carrying out the process according to one of claims 1 to 3 for automatically measuring the shearing strength of the green sand used in a repetitive sand moulding process using pattern plates, and for using the result of the measurement operation for modulating the various parameters of the moulding process, said apparatus comprising a detector which is fixed to one of the pattern plates and which permits said measurement operation to be carried out, characterised in that said detector is a measuring ring (10) comprising an orifice (12) which makes it possible to shear a disc of sand during the movement of withdrawal of said pattern plate (2) and strain gauges which are fixed in reduced-thickness lateral portions (15) of said measuring ring (10) on respective sides of said orifice (12), said ring (10) also being in the form of a bearing, said orifice (12) being a cylindrical bore and said lateral portions (15) being produced by external millings (14) at the bottom of which the strain gauges are disposed.

5. Apparatus according to claim 4 characterised in that the body of the measuring ring (10) is defined in the direction of the axis of said cylindrical bore (12) by two planes (13) with a slight relief rake with respect to the direction of withdrawal from the mould.

6. Apparatus according to one of claims 4 and 5 characterised in that said millings (14) communicate by way of holes (16) with the plane of the base of said bearing to permit strain gauge connecting wires to be housed therein, and that said millings (14) are then filled by a filling which provides for protection for the strain gauges and eliminates any undercut configuration.

**Ansprüche**

1. Verfahren zur automatischen Messung des Scherwiderstandes von Formsand beim wiederholten Sandformvorgang mittels Formwänden und Auswertung des Meßergebnisses hinsichtlich der Veränderung der verschiedenen Parameter des Vorgangs, dadurch gekennzeichnet, daß an einer der Formwände (2) ein Meßring (10) angeordnet wird, der eine Öffnung (12) aufweist, die das Abscheren einer Sandscheibe beim Herausziehen der Formwand (2) ermöglicht, und daß Dehnungsmeßstreifen an den seitlichen, dünneren Bereichen (15) des Meßrings (10) beidseits der Öffnung (12) befestigt sind, daß die Dehnungsmeßstreifen über die Formwand (2) mit einer elektronischen Meß- und Auswerteanordnung (17) verbunden werden, daß in dieser Meßanordnung verschiedene physikalische für den Sand charakteristische Größen berechnet werden, darunter der Scherwiderstand der während des Verdichtens in der Öffnung (12) komprimierten Sandscheibe und daß anschließend das Ergebnis der Messungen mittels eines Rechners verarbeitet wird um die Veränderungswerte zu bestimmen, insbesondere der Wiederauffrischung mit Zusammenbackstoffen des wieder verwendeten Sandes.

2. Verfahren nach Anspruch 1, dadurch gekennzeichnet, daß der Meßring (10) an der rückwärtigen Formwand (2) einer Horizontalpresse (1) angeordnet wird, wobei die Öffnung (12) in Ausblasrichtung (6) des Sandes in die Presse (1) derart ausgerichtet ist, daß bei jedem Füllvorgang die vom Meßring (10) während des vorhergehenden Zyklus abgescherte Sandscheibe entfernt wird.

3. Verfahren nach einem der vorhergehenden Ansprüche, dadurch gekennzeichnet, daß die vorher bestimmten Eigenschaften des Sandes verwendet werden um den Verdichtungsdruck im Inneren der Form zu bestimmen und die Veränderung des Preßdrucks der Presse (1) daraus zu berechnen.

4. Vorrichtung zur Durchführung des Verfahrens nach einem der Ansprüche 1 bis 3 zur automatischen Messung des Scherwiderstandes von Formsand beim wiederholten Sandformvorgang mittels Formwänden und zur Auswertung des Meßergebnisses hinsichtlich der Veränderung der verschiedenen Parameter des Vorgangs, wobei die Vorrichtung einen an einer der Formwände befestigten Fühler aufweist und das Durchführen der Messung ermöglicht, dadurch gekennzeichnet, daß der Fühler ein Meßring (10) ist, der eine Öffnung (12) aufweist, die das Abscheren einer Sandscheibe während des Herausziehens der Formwand (2) ermöglicht und daß Dehnungsmeßstreifen an den seitlichen dünneren Bereichen (15) dieses Meßrings (10) beidseitig der Öffnung (12) befestigt sind ; wobei der Ring (10) außerdem die Form eines Absatzes aufweist, die Öffnung (12) eine zylindrische Bohrung ist und die seitlichen dünneren Bereiche (15) durch Außenfräsungen (14) erhalten sind, an deren Boden die Dehnungsmeßstreifen angeordnet sind.

5. Vorrichtung nach Anspruch 4, dadurch gekennzeichnet, daß der Körper des Meßrings (10) in Richtung der Achse der zylindrischen Bohrung (12) von zwei in Richtung des Herausnehmens aus der Form leicht schräg zueinander zulaufenden Ebenen (13) begrenzt ist.

6. Vorrichtung nach einem der Ansprüche 4 und 5, dadurch gekennzeichnet, daß die Ausfräsungen (14) über Löcher (16) mit der Grundebene des Absatzes in Verbindung stehen um das Anordnen von Verbindungsdrähten der Drehnungsmeßstreifen zu ermöglichen und daß die Ausfräsungen (14) anschließend mit einer Füllmasse ausgefüllt sind, die den Schutz der Dehnungsmeßstreifen und das Unterdrücken von jeglichem Verziehen ermöglicht.

.

FIG.1

0 074 881

# FIG.2

# FIG.3

0 074 881